# FASCICULE DE BREVET EUROPEEN

(11) **EP 1 928 701 B1**
(45) Date de publication et mention de la délivrance du brevet: **30.07.2014**
(21) Numéro de dépôt: 06831199.2
(22) Date de dépôt: 20.09.2006
(51) Int. Cl.: B60R 13/08

(54) **PROCEDE D'OPTIMISATION DU CONFORT ACOUSTIQUE ET VIBRATOIRE DANS UN HABITACLE MOBILE**
VERFAHREN ZUM OPTIMIEREN DES AKUSTISCHEN - UND VIBRATION KOMFORTS IN EINEM MOBILEM INNENRAUM.
METHOD FOR OPTIMIZING ACOUSTIC COMFORT IN A MOBILE VEHICLE PASSENGER COMPARTMENT

(30) Priorité: 20.09.2005 FR 0552814
(43) Date de publication de la demande: 11.06.2008
(73) Titulaire: SAINT-GOBAIN GLASS FRANCE, 92400 Courbevoie (FR)
(72) Inventeur: CHARLIER, Julien, F-60200 COMPIEGNE (FR); REHFELD, Marc, F-95460 EZANVILLE (FR)
(74) Mandataire: Aupetit, Muriel J. C.
(86) Numéro de dépôt international: PCT/FR2006/050910
(87) Numéro de publication internationale: WO 2007/034113

(56) Documents cités:
- EP-A- 0 908 866
- WO-A-2004/012952
- FR-A- 2 256 658
- US-A- 5 504 282
- US-A1- 2005 126 848
- US-B1- 6 820 720
- PATENT ABSTRACTS OF JAPAN vol. 2003, no. 12, 5 décembre 2003 (2003-12-05) & JP 2004 130731 A (KANEGAFUCHI CHEM IND CO LTD), 30 avril 2004 (2004-04-30)

## Description

L'invention concerne un procédé de réduction de la gêne acoustique et vibratoire dans un habitacle, en particulier un habitacle mobile tel qu'un véhicule, notamment un véhicule automobile.

Outre les véhicules automobiles ou autres types de véhicules tels que les camions, cars, matériels agricoles, l'invention s'applique à tous types d'engins de locomotion présentant un habitacle fermé ou sensiblement fermé, tels que les avions, les trains, les bateaux , les sous-marins...

Parmi toutes les qualités concourant au confort dans les moyens de transport modernes comme les trains et les automobiles, le confort acoustique et vibratoire devient déterminant. En effet, les autres sources de désagrément d'origine mécanique, thermique, de visibilité, etc... ont été à peu près maîtrisées. Mais l'amélioration du confort acoustique et vibratoire présente de nouvelles difficultés.

On distingue différents types de perturbations du confort acoustique dans un véhicule :
- les bruits d'origine aérodynamique, c'est-à-dire créés par le frottement de l'air sur le véhicule en déplacement,
- les bruits extérieurs transmis par voie aérienne, engendrés par exemple lors du dépassement d'autres véhicules, ou comme les bruits de moteur (en particulier lors du passage en tunnel ou proche d'un objet réfléchissant les ondes sonores comme un mur en béton), bruits de bouche du pot d'échappement, bruits de roulement, ou encore les bruits de rétroviseur (bruits ayant une origine aérodynamique mais qui se propagent par voie aérienne),
- les bruits d'impacts, tels que la pluie frappant le véhicule,
- les bruits solidiens, c'est-à-dire les bruits transmis par la caisse du véhicule, ayant par exemple pour origine les vibrations de moteur (en particulier à certaines vitesses de rotation du moteur), de ligne d'échappement, des amortisseurs, du groupe moto-propulseur...

De la même manière, il existe différents types de perturbations du confort vibratoire :
- les vibrations provenant du train de roulement qui sont transmises à la caisse, par exemple générées par le roulement sur la chaussée et transmises à la caisse par les amortisseurs et,
- les vibrations provenant du groupe moto-propulseur (moteur, boîte de vitesse, ligne d'échappement) et transmises à la caisse.

Dans la conception de véhicules, on distingue communément l'ensemblier et les équipementiers.

L'ensemblier assure la conception globale, l'assemblage et la commercialisation des véhicules, soit directement, soit en faisant appel à une sous-traitance partielle ou totale.

Les équipementiers assurent la conception et la réalisation de pièces ou équipements servant à la construction du véhicule, soit directement, soit en faisant appel à une sous-traitance partielle ou totale.

Dans leur activité de conception sur le véhicule complet ou sur certaines pièces ou équipement, l'équipe constituée de l'ensemblier et de l'un ou de plusieurs de ses équipementiers est appelé « équipe de conception ».

De nombreux efforts ont été réalisés par les ensembliers et certains équipementiers afin d'améliorer le confort acoustique et vibratoire à l'intérieur de l'habitacle du véhicule, par exemple en utilisant des revêtements absorbants à l'intérieur du véhicule, ou en fournissant pour la mécanique du véhicule des pièces de liaison en élastomère, ou encore en fournissant des améliorations techniques sur les vitrages, en particulier :
- Les formes des vitrages ont été modifiées, on a amélioré la pénétration dans l'air et diminué les turbulences qui sont elles-mêmes sources de bruits.
- Des vitrages feuilletés sont réalisés, dont l'intercalaire possède des propriétés d'amélioration de l'amortissement vibratoire et de l'isolement acoustique conférant à l'habitacle une bonne protection contre les bruits aérodynamiques et/ou les bruits d'origine aérienne et/ou les bruits d'origine solidienne. On peut citer comme intercalaires, ceux présentant les caractéristiques décrites dans le brevet EP 387 148 - B1 et dans la demande de brevet EP 844 075.
- Sont employés des joints d'étanchéité disposés entre la carrosserie du véhicule et le vitrage, et constitués d'un ou plusieurs matériaux dont les caractéristiques permettent un amortissement vibratoire. Les demandes de brevet PCT/FR03/02417 et FR 04/09807 précisent les caractéristiques remplies par de tels joints.
- Ont été créées des zones de rayonnement en opposition de phase aux zones de rayonnement créées par l'excitation du vitrage soumis à un champ vibratoire afin de diminuer le rayonnement global du vitrage.
- Il a été proposé de modifier localement la liaison vitrage/carrosserie au niveau du joint périphérique; par exemple, la diminution du déplacement du vitrage dans le joint périphérique uniquement sur une partie limitée de la périphérie du vitrage permet de réaliser un vitrage dépourvu au moins du premier mode impair de rayonnement lorsque celui-ci est excité par un champ acoustique (demande de brevet EP 908 866).

Il s'avère cependant que les diverses solutions proposées indépendamment par chaque équipementier ou par l'ensemblier ne conviennent pas forcément pour tous les véhicules. Les inventeurs ont mis en évidence qu'en particulier la taille du véhicule, son habitacle, le type de matériaux utilisés dans sa construction, jouent également un rôle dans la propagation des champs vibratoires et quant aux fréquences plus particulières pour lesquelles ces champs vibratoires engendrent une perturbation du confort acoustique ou vibratoire.

Il est important de souligner que l'invention ne s'attache pas seulement à la réduction du niveau acoustique et vibratoire mais s'attache aussi à une amélioration du confort acoustique et vibratoire qui réside en particulier dans l'amélioration du bruit ou des vibrations résiduels, en préférant par exemple les bruits continus aux bruits intermittents.

Aussi, l'invention a pour but de fournir une nouvelle démarche dans la conception de solutions assurant un confort global aussi bien acoustique que vibratoire, et adaptées à chaque type d'habitacle.

L'invention propose ainsi de considérer, en combinaison, les principaux paramètres influençant la génération, la propagation et la transmission des champs vibratoires et acoustiques à travers et à l'intérieur de l'habitacle, en tenant compte du type de véhicule, de sa forme, de ses matériaux constitutifs, et notamment du comportement vibro-acoustique des vitrages qui réside en particulier dans la forme du vitrage, dans la structure du vitrage, dans l'interface vitrage/habitacle.

L'invention fournit un procédé d'optimisation de la maîtrise du confort acoustique et vibratoire à l'intérieur d'un habitacle en respectant un cahier des charges fourni par le constructeur, en termes de performance acoustique, de performance vibratoire et de coût des moyens à mettre en oeuvre pour obtenir des performances d'amélioration du confort, en veillant notamment à la faisabilité des éléments, à ne pas augmenter les épaisseurs des vitrages inconsidérément pour des raisons de poids, à ne pas dégrader la qualité optique au travers des vitrages, à ne pas dégrader la tenue mécanique de l'habitacle, à assurer l'essuyabilité du vitrage selon sa forme...

Le procédé de l'invention est mis en oeuvre par l'ensemblier destiné à assurer la conception globale de l'habitacle et/ou par au moins un équipementier destiné à assurer la conception d'une partie de l'habitacle.

Selon l'invention, le procédé d'optimisation de la performance acoustique et vibratoire à l'intérieur d'un habitacle mobile consiste à :
- établir la liste des indicateurs de confort que sont les critères définissant la qualité de la performance acoustique et vibratoire et fournir des valeurs cibles de ces indicateurs,
- établir la liste des contraintes concernant tout ou partie de l'ensemble de l'habitacle et liées à plusieurs équipementiers, les contraintes étant des informations relatives à toutes les exigences autres que celles concernant le confort acoustique ou vibratoire,
- définir des données d'entrée influençant la génération, la propagation et la transmission des champs vibratoires et acoustiques à l'intérieur de l'habitacle , les données d'entrée étant liées à plusieurs équipementiers et certaines données d'entrée étant limitées par des contraintes,
- estimer les valeurs des indicateurs de confort de l'habitacle en fonction des données d'entrée,
- comparer les valeurs estimées aux valeurs cibles,
- lorsque les valeurs estimées ne correspondent pas aux valeurs cibles, agir isolément ou en combinaison sur tout ou partie des données d'entrée,
- répéter de manière itérative les étapes d'estimation des valeurs des indicateurs de confort du véhicule, de leur comparaison avec les valeurs cibles, et d'action sur les données d'entrée, de manière à assurer la convergence des valeurs des indicateurs de confort vers les valeurs cibles.

On entend par "convergence des valeurs", le fait d'obtenir l'exactitude des valeurs cibles, ou d'obtenir des valeurs sensiblement proches des valeurs cibles selon une marge différentielle qu'on aura fixée.

La qualité de la performance acoustique et vibratoire correspond aux objectifs de confort décidés par l'ensemblier en fonction du type, de la gamme du véhicule, du marché visé, de l'image qu'il souhaite renvoyer en terme de confort, du cahier des charges fourni par le client, etc...

Ces objectifs ou critères définissant la qualité de la performance sont traduits sous forme d'indicateurs physiques mesurables se rapportant à l'intérieur de l'habitacle mobile ou associés à une pièce ou à un équipement de l'habitacle.

A titre d'exemples non limitatifs, les indicateurs physiques sont le niveau de la pression acoustique en certains points de l'habitacle, le niveau du déplacement, de la vitesse ou de l'accélération vibratoire en certains points de l'habitacle, l'indicateur psycho-acoustique ou d'intelligibilité en certains points de l'habitacle, le niveau de puissance acoustique rayonnée par une pièce ou un équipement, le niveau d'effort injecté par une pièce ou un équipement, le coefficient d'absorption acoustique de certaines pièces ou équipements, l'isolement acoustique de certaines pièces ou équipements, le coefficient d'amortissement vibratoire apporté par certaines pièces ou équipements, l'atténuation vibratoire apportée par un système de fixation entre deux pièces ou équipements.

Selon une caractéristique, on établit la liste des contraintes absolues, c'est-à-dire les caractéristiques qui doivent nécessairement être satisfaites pour garantir certaines fonctions jugées essentielles, et sur lesquelles il est impératif de ne pas agir, et la liste des contraintes indéfinies, c'est-à-dire les caractéristiques dont les valeurs peuvent évoluer sans préjudice sur la qualité globale de l'habitacle mobile en définissant les proportions ou plages pour lesquelles on peut faire varier ces valeurs.

Selon une autre caractéristique, on définit les données d'entrée telles que la géométrie et/ou les dimensions de l'habitacle et d'éléments constitutifs du véhicule les propriétés physiques des matériaux et les états comportementaux des éléments constitutifs de l'habitacle mobile vis-à-vis des excitations acoustiques et vibratoires sous forme de valeurs, de bases modales, de fonctions de transfert, de spectres ou interspectres...

Les données d'entrée peuvent être figées si elles correspondent à des contraintes absolues, peuvent varier dans un certain cadre si elles correspondent à des contraintes indéfinies ou peuvent rester libres si elles n'ont aucun lien avec les contraintes définies.

Il est préférable avant de débuter toutes opérations d'estimation, mesure, ou calcul, de définir les moyens de conception qui sont utilisés pour justement estimer des grandeurs corrélées aux valeurs cibles des critères définissant la qualité de la performance acoustique et vibratoire, et de comparer ces grandeurs aux valeurs cibles.

Les moyens de conception peuvent être basés sur des approches expérimentales, des approches prédictives totalement numériques, ou sur une combinaison de ces approches.

Les moyens de conception prédictifs peuvent permettre d'estimer a priori la valeur des indicateurs de confort que l'on pourrait obtenir sur un habitacle mobile, une pièce ou un équipement avant de l'avoir réalisé. Ils peuvent permettent également de hiérarchiser plusieurs solutions possibles vis-à-vis des objectifs de confort qui ont été définis, indiquant quelles solutions permettent d'approcher au mieux les objectifs.

Les moyens prédictifs ont l'avantage de permettre une estimation des indicateurs avant la réalisation de l'habitacle ou de ses sous-systèmes. La réalisation de prototypes étant souvent onéreuse et lente, la mise en oeuvre de moyens prédictifs peut engendrer un gain de temps et une réduction des coûts de conception. Les moyens prédictifs donnent cependant une estimation des indicateurs avec une précision difficile à quantifier et parfois insuffisante, qui dépend des hypothèses faites lors de la modélisation. Le degré de fiabilité requis pour les moyens de conception peut être adapté à la criticité du phénomène étudié en terme de confort : par exemple, si l'équipe de conception travaille sur un objectif jugé sensible, elle se dotera de moyens fiables pour envisager le problème. Le degré de fiabilité requis pour les moyens de conception peut être adapté au stade de la conception : par exemple, des moyens donnant des résultats assez grossiers à faible coût pourront apparaître satisfaisants au stade de l'avant projet, pour déterminer certaines orientations majeures en terme de confort acoustique ou vibratoire, alors que des moyens nécessitant plus de ressources seront privilégiés au stade de la conception fine, pour leur meilleure fiabilité.

L'atteinte des objectifs est réalisée en modifiant les données d'entrée : en gardant telles quelles les données d'entrées figées par une contrainte absolue, ou en modifiant les données d'entrée relatives à des contraintes indéfinies, à l'intérieur du cadre qui leur a été fixé, ou en modifiant librement les données d'entrée qui sont indépendantes d'une quelconque contrainte.

Le choix dans les variations des données d'entrée peut être à l'initiative d'une personne, souvent spécialiste dans le domaine de l'acoustique ou des vibrations, en fonction de son expérience, de sa compréhension des différents phénomènes, de son utilisation des moyens d'optimisation. Le choix dans les variations des données d'entrée peut être partiellement ou totalement automatisé, en s'appuyant par exemple sur un algorithme d'optimisation.

De manière non exhaustive, on peut citer les actions suivantes effectuées sur certaines données d'entrée pour modifier celles-ci afin de participer à l'optimisation du confort, en particulier par rapport aux vitrages associés à l'habitacle :
- On modifie de manière spatiale la forme d'un mode de rayonnement du vitrage, constituant une donnée d'entrée, lorsque ledit vitrage est excité par un champ acoustique ou vibratoire. Ainsi, on peut supprimer pour le vitrage au moins le ou les modes de rayonnement qui sont couplés avec un ou plusieurs modes de cavité de l'habitacle, par exemple en réduisant pour le vitrage au moins la réponse du premier mode impair. Cela s'effectue notamment par un déplacement localement diminué du vitrage dans le joint périphérique associé entre le vitrage et l'habitacle.
- On décale de manière fréquentielle un mode de rayonnement du vitrage par rapport à un mode de cavité de l'habitacle.
- On génère des phénomènes acoustiques en opposition de phase par rapport aux rayonnements dans l'habitacle, ce qu'on appelle usuellement du contrôle actif.
- On modifie par exemple le flux d'air entrant en contact avec le vitrage, tel que par l'association de déflecteurs sur l'extérieur de l'habitacle.
- On agit sur la nature du matériau du joint périphérique associé entre le vitrage et l'habitacle.
- On modifie le couplage mécanique entre le vitrage et l'habitacle, de manière à favoriser une dissipation de l'énergie vibratoire davantage, selon un travail en cisaillement, ou selon un travail en traction-compression en fonction de la nature des matériaux de l'habitacle et des éléments intermédiaires entre le vitrage et l'habitacle.
- On modifie la forme, l'épaisseur et/ou les matériaux constitutifs du vitrage.

Lorsqu'après un nombre d'itérations pour les étapes d'estimation des valeurs des indicateurs, de comparaison et d'action sur les données d'entrée a été jugée suffisant selon la complexité du problème posé, aucun jeu de données d'entrée n'a permis d'atteindre les objectifs, ces derniers sont redéfinis en redéfinissant notamment les données d'entrée et éventuellement les contraintes.

Lorsque le procédé d'optimisation est terminé, on établit un bilan des données d'entrée ayant permis de les atteindre.

Le procédé d'optimisation est mis en oeuvre de préférence par l'équipe de conception afin de converger vers des solutions optimales garantissant pour l'habitacle:
- le respect des contraintes : un strict respect des contraintes absolues, un respect des contraintes indéfinies dans le cadre qui a été fixé,
- l'atteinte des objectifs de confort acoustique et vibratoire, soit strictement, soit au plus proche en utilisant une démarche de compromis. La démarche de compromis consiste à redéfinir les objectifs, à la hausse ou à la baisse, afin de pouvoir obtenir une solution satisfaisante.

La démarche d'optimisation selon l'invention assure une interaction nécessaire entre les contraintes et les données d'entrée des divers équipementiers afin de considérer toutes ces informations dans leur globalité.

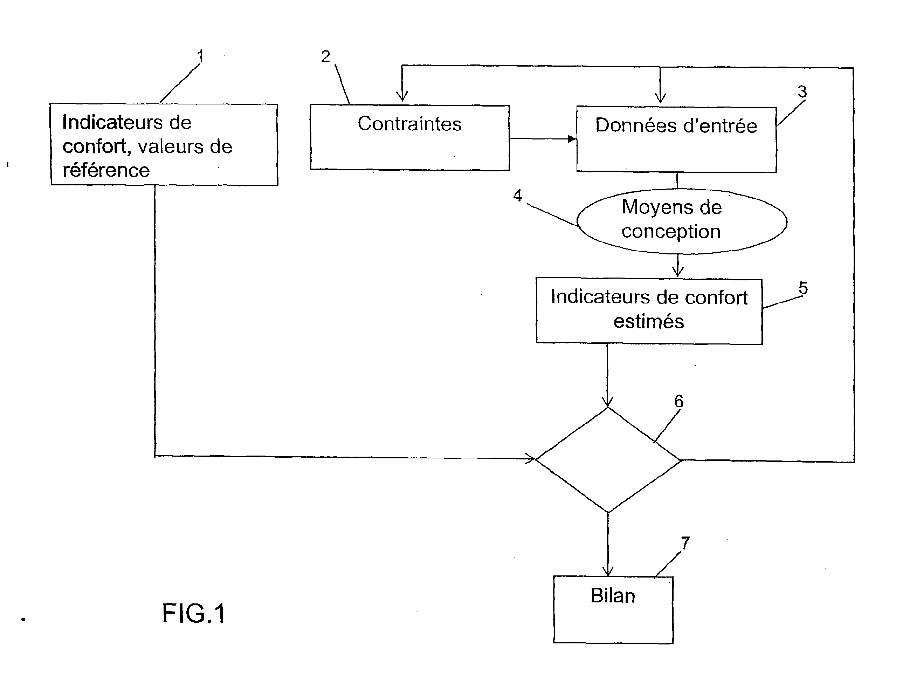

D'autres caractéristiques et avantages apparaîtront dans la suite de la description en regard du dessin schématique de la figure 1.

Le procédé d'optimisation de la performance acoustique et vibratoire à l'intérieur d'un habitacle mobile tel qu'un véhicule, ici un véhicule automobile, consiste selon l'invention à suivre les étapes suivantes :
- établir la liste des indicateurs de confort que sont les critères définissant la qualité de la performance acoustique et vibratoire et fournir des valeurs cibles de ces indicateurs (bloc 1 de la figure 1),
- établir la liste des contraintes (bloc 2), qui correspondent à des informations liées à toutes les exigences autres que celles concernant le confort acoustique ou vibratoire,
- définir des données d'entrée influençant la génération, la propagation et la transmission des champs vibratoires et acoustiques à l'intérieur de l'habitacle (bloc 3), certaines données d'entrée pouvant être liées à des contraintes (flèche du bloc 2 vers le bloc 3),
- estimer les valeurs des indicateurs de confort du véhicule en fonction des données d'entrée (bloc 5) grâce aux moyens de conception (bloc 4),
- comparer les valeurs estimées aux valeurs cibles (bloc 6),
- lorsque les valeurs estimées ne correspondent pas aux valeurs cibles, agir isolément ou en combinaison sur les données d'entrée,
- répéter de manière itérative les étapes d'estimation des valeurs des indicateurs de confort du véhicule, de leur comparaison avec les valeurs cibles, et d'action sur les données d'entrée, de manière à assurer la convergence des valeurs des indicateurs de confort vers les valeurs cibles.

Il s'agit tout d'abord d'établir la liste des critères définissant la qualité de la performance acoustique et vibratoire (bloc 1). Cette qualité correspond aux objectifs de confort décidés par l'ensemblier en fonction du type, de la gamme du véhicule, du marché visé, de l'image qu'il souhaite renvoyer en terme de confort, du cahier des charges fourni par le client, etc...

Les objectifs de confort sont traduits sous forme d'indicateurs physiques qui sont mesurables en se rapportant à l'intérieur du véhicule ou mesurables en étant associés à une pièce ou à un équipement du véhicule.

Les indicateurs physiques mesurables à l'intérieur du véhicule caractérisent le véhicule dans son ensemble, par exemple :
- le niveau de la pression acoustique (linéaire ou pondérée) en certains points de l'habitacle, par exemple au niveau des oreilles du conducteur, du passager avant ou des passagers arrière ;
- le niveau du déplacement, de la vitesse ou de l'accélération vibratoire (linéaire ou pondérée) en certains points de l'habitacle, par exemple au niveau du plancher, du volant, du levier de vitesse ou de l'embase du rétroviseur intérieur ;
- l'indicateur psycho-acoustique (comme la sonie ou la rugosité) ou d'intelligibilité (comme le RASTI ou le STI) en certains points de l'habitacle. Ces indicateurs sont des valeurs obtenues par un traitement spécifique de signaux de pression acoustique mesurés dans le véhicule.

Les objectifs de confort peuvent aussi être associés à une pièce ou à un équipement particulier, par exemple :
- le niveau de puissance acoustique rayonnée par une pièce ou un équipement. On peut citer la puissance acoustique rayonnée par les bouches de ventilation à l'intérieur de l'habitacle, la puissance acoustique rayonnée par l'échappement à l'extérieur de l'habitacle, la puissance acoustique rayonnée par le moteur à l'extérieur de l'habitacle, la puissance acoustique rayonnée par le flux d'air autour des rétroviseurs extérieurs, la puissance acoustique générée par le contact entre les roues et la voie ;
- le niveau d'effort injecté par une pièce ou un équipement. On peut citer l'effort injecté à la caisse par le groupe moto-propulseur par l'intermédiaire des pièces de fixation (complet ou par l'un ou plusieurs de ses sous-systèmes, comme le moteur, la boîte de vitesse, la ligne d'échappement...), les efforts injectés à la caisse par le train de roulement (boîtes d'essieu, arbre d'entraînement, amortisseur, suspension, etc...) ;
- le coefficient d'absorption acoustique de certaines pièces ou équipements. On peut citer l'absorption acoustique apportée par un revêtement intérieur de l'habitacle, par un revêtement placé à l'intérieur du capot du moteur ;
- l'isolement acoustique de certaines pièces ou équipements, par exemple l'isolement acoustique de certains éléments constituant la carrosserie, ou l'isolement acoustique par des vitrages fixés à la carrosserie ;
- le coefficient d'amortissement vibratoire apporté par certaines pièces ou équipements. On peut citer l'amortissement vibratoire apporté à la caisse par un bitumineux collé à la tôle, l'amortissement vibratoire apporté à la caisse et/ou au vitrage par un intercalaire inséré entre deux feuilles de verre, l'amortissement vibratoire apporté à une ou plusieurs pièces par une colle de fixation ;
- l'atténuation vibratoire apportée par un système de fixation entre deux pièces ou équipements, dont l'un constitue une source de vibrations. On peut citer l'atténuation vibratoire apportée par les éléments souples interposés entre le bloc moteur et la caisse, l'atténuation vibratoire apportée par les systèmes de suspension interposés entre le train de roulement et la caisse, l'atténuation vibratoire apportée par les éléments souples interposés entre la ligne d'échappement et la caisse.

Dans tous les cas, la valeur cible attribuée à chacun des indicateurs de confort pour juger de la qualité du confort acoustique et vibratoire peut être unique (par exemple un seuil à ne pas dépasser quelle que soit la configuration d'utilisation), ou bien dépendre de différents paramètres, par exemple la fréquence, le régime de rotation du moteur, la charge du moteur, la vitesse et les conditions de roulage, le fonctionnement ou arrêt de divers équipements, etc...

Il est nécessaire dans le procédé de l'invention de tenir compte des contraintes (bloc 2) qui sont fixées par l'ensemblier en fonction de la conception du véhicule pour répondre à toutes les exigences autres que celles concernant le confort acoustique et vibratoire, par exemple le bon fonctionnement, la sécurité des passagers, l'esthétique, le prix, le cahier des charges fourni par le client, etc...

Les objectifs de confort acoustique et vibratoire doivent être atteints en respectant l'ensemble de ces contraintes. Ces contraintes peuvent être déclinées sous forme de cahier des charge pour chaque équipementier : par exemple, pour l'équipementier qui fournit un vitrage, des contraintes seront la forme du vitrage, sa composition (matières utilisées, épaisseurs), sa couleur, les qualités optiques requises, etc...

Les contraintes sont divisées en deux groupes :
- les contraintes dites absolues, c'est-à-dire celles qui doivent nécessairement être satisfaites pour garantir certaines fonctions jugées essentielles par l'ensemblier (comme la sécurité, le fonctionnement du véhicule...). Par exemple, dans le cas d'un vitrage, la transparence peut être une contrainte absolue ;
- les contraintes dites indéfinies, c'est-à-dire qu'elles peuvent évoluer (de manière continue ou discrète) dans une certaine plage, sans préjudice sur la qualité globale du véhicule. Par exemple, dans le cas d'un vitrage, l'épaisseur du vitrage peut être une contrainte indéfinie, si l'ensemblier estime que plusieurs épaisseurs sont acceptables (à condition ou non qu'elles soient comprises dans un certain intervalle).

Il est également nécessaire d'établir des données d'entrée (bloc 3) qui sont définies par l'équipe de conception en fonction des objectifs visés et des contrai ntes.

Les données d'entrée influencent la génération, la propagation et la transmission des champs vibratoires et acoustiques à l'intérieur du véhicule. C'est donc sur ces données qu'il conviendra d'agir pour optimiser le confort acoustique et vibratoire.

Les données peuvent être très diverses. Elles ont trait non seulement à des pièces particulières du véhicule qui concernent chaque équipementier séparément, mais ont trait aussi à l'ensemble du véhicule pour concevoir un composant de manière optimale car de forts couplages mécaniques et acoustiques existent entre tous les éléments du véhicule. Par exemple, dans la mesure où le collage sur la carrosserie modifie le comportement dynamique du vitrage par rapport à son comportement lorsqu'il est pris isolément, il n'est pas possible d'optimiser ce vitrage vis-à-vis du confort à l'intérieur du véhicule sans connaître précisément le comportement dynamique de la carrosserie.

Aussi, les données d'entrée doivent être considérées dans la globalité du véhicule, et il s'avère nécessaire que certains équipementiers connaissent des données liées à un autre équipementier.

On peut par exemple citer comme données d'entrée:
- les informations sur la géométrie et les dimensions (longueur, largeur et épaisseur) du véhicule et de ses éléments constitutifs (vitrages, joints, pièces de liaison...);
- des informations sur les propriétés physiques des matériaux constituant les systèmes, telles que les modules de rigidité et de cisaillement ainsi que les masses volumiques;
- des informations sur les excitations vibratoires, par exemple pour les bruits d'origine solidienne et le confort vibratoire, les spectres des efforts injectés dans le système étudié (comme les efforts produit par le groupe motopropulseur sur la caisse du véhicule ou les efforts produits par le contact entre le véhicule et la voie);
- des informations sur les excitations acoustiques et aérodynamiques ; par exemple pour les bruits extérieurs transmis par voie aérienne, des spectres de puissance acoustique rayonnée par les sources ainsi que leurs diagrammes de directivité, ou pour les bruits d'origine aérodynamique, une description du champ de pression venant exciter les parois (notamment en fournissant des informations sur la densité spectrale d'énergie et sur les intercorrélations spatiales);
- des informations sur les excitations par impact, par exemple, pour le bruit de pluie, une description des efforts injectés sur les parois sous forme déterministe ou stochastique.

Ces données peuvent correspondent à des plans sous quelque format que ce soit, notamment sous forme de schéma, de dessin industriel sur papier, ou à des fichiers de données informatiques créés et lisibles par exemple par un logiciel de conception assistée par ordinateur.

Lorsqu'un membre de l'équipe de conception ne souhaite pas donner un trop grand nombre d'informations à l'ensemble de l'équipe de conception, par exemple pour des raisons de confidentialité du savoir-faire ou pour éviter de refaire un travail déjà réalisé par ailleurs, des données d'entrée représentant le comportement d'une pièce, d'un équipement ou de toute une partie du véhicule vis-à-vis du confort acoustique et vibratoire peuvent être plus complexes. La préparation des données doit être compatible avec les moyens de conception utilisés pour permettre alors de modéliser le couplage d'un équipement ou d'une pièce avec d'autres systèmes sans modéliser complètement ces autres systèmes. Par exemple, les données d'entrée peuvent être :
- une base modale, complète ou réduite, mesurée ou calculée, d'une partie du véhicule, d'une pièce ou d'un équipement.
- un ensemble de fonctions de transfert, spectres ou interspectres, mesurés ou calculés, caractérisant une partie du véhicule, une pièce ou un équipement.
- des facteurs de perte par couplage et des facteurs de perte par amortissement, au sens de l'analyse statistique énergétique, caractérisant une partie du véhicule, une pièce ou un équipement.
- un modèle condensé ou un système de super-éléments (au sens des éléments finis) caractérisant une partie du véhicule, une pièce ou un équipement.

Une fois que les indicateurs de confort sont définis avec leur valeur cible pour chacun d'eux, que les contraintes et les données d'entrée sont établies pour le véhicule, on estime les valeurs des indicateurs de confort pour ledit véhicule (bloc 5) à l'aide des moyens de conception (bloc 4) qui seront définis ultérieurement, et on compare ces valeurs estimées avec les valeurs cibles (bloc 6).

Si au moins l'une de ces valeurs est différente de l'objectif fixé, on modifie isolément ou en combinaison tout ou partie des données d'entrée, en gardant telles quelles les données d'entrées figées par une contrainte absolue, ou en modifiant les données d'entrée relatives à des contraintes indéfinies, à l'intérieur du cadre qui leur a été fixé, ou en modifiant librement les données d'entrée qui sont indépendantes d'une quelconque contrainte.

Le nouveau jeu de données d'entrée est réutilisé pour estimer à nouveau les valeurs des indicateurs de confort qui sont à nouveau comparées aux valeurs cibles afin de les atteindre par une méthode itérative.

Lorsque après un nombre d'itérations jugé suffisant selon la complexité du problème posé par l'équipe de conception, aucun jeu de données d'entrée n'a permis d'atteindre les objectifs, ces derniers sont redéfinis. Le procédé est alors repris en redéfinissant les données d'entrée et éventuellement les contraintes.

Lorsque les objectifs sont atteints, on établit un bilan des données d'entrée ayant permis de les atteindre (bloc 7). Les données d'entrée donnant satisfaction permettent de figer la conception du véhicule d'un point de vue confort acoustique et vibratoire.

Pour assurer les diverses opérations du procédé d'optimisation, on a au préalable défini les moyens de conception utilisés pour concevoir un véhicule atteignant les objectifs de confort acoustique et vibratoire. Ces moyens sont définis conjointement par les membres de l'équipe de conception en fonction de la nature des objectifs à atteindre, du type de contrainte et des moyens techniques disponibles (connaissances scientifiques et techniques, système de mesure, système de calcul prévisionnel...). Ces moyens permettent, à partir d'un certain nombre de données d'entrée, d'obtenir, directement ou non, une estimation de grandeurs corrélées aux indicateurs de confort et de comparer les valeurs obtenues aux objectifs qui ont été définis.

Les moyens de conception peuvent être basés sur une ou plusieurs approches expérimentales, par exemple :
- mesures de constat sur une pièce, un équipement ou un véhicule complet, permettant de connaître un niveau de pression acoustique, un niveau de déplacement, de vitesse ou d'accélération vibratoire, la valeur d'un indicateur psycho-acoustique, l'effort injecté par une pièce sur une autre, la puissance rayonnée par une pièce ou un équipement, l'absorption acoustique apportée par une pièce ou un équipement, l'amortissement vibratoire apporté par une pièce ou un équipement, l'isolement acoustique d'une pièce ou d'un équipement, l'atténuation vibratoire d'une pièce ou d'un équipement.
- mesures de diagnostic sur une pièce, un équipement ou un véhicule complet, permettant de comprendre la génération, la propagation ou l'amplification de certains bruits ou vibrations.

Les moyens de conception peuvent également être basés sur une ou plusieurs approches prédictives totalement numériques, par exemple :
- une modélisation par éléments finis et/ou éléments finis infinis décrivant les interactions mécaniques et/ou acoustiques entre tout ou partie du véhicule et éventuellement le fluide (air) contenu dans l'habitacle ou dans l'environnement extérieur du véhicule ;
- une modélisation par éléments de frontière décrivant les interactions mécaniques et/ou acoustiques entre tout ou partie du véhicule et éventuellement le fluide contenu dans l'habitacle ou dans l'environnement extérieur du véhicule ;
- une modélisation par tir de rayons décrivant les propagations acoustiques à l'intérieur de l'habitacle ou dans l'environnement extérieur du véhicule ;
- une modélisation par approche énergétique, faisant ou non intervenir un traitement statistique, caractérisant les échanges et dissipations d'énergies vibratoires et/ou acoustiques entre divers éléments du véhicule et éventuellement le fluide contenu dans l'habitacle ou dans l'environnement extérieur du véhicule.

Les moyens de conception peuvent encore être basés sur une approche mixte combinant des approches prédictives et expérimentales.

Ainsi, le procédé d'optimisation de la performance acoustique et vibratoire à l'intérieur d'un véhicule selon l'invention considère un ensemble de critères définissant la qualité de la performance acoustique et vibratoire, à considérer les contraintes, à tenir compte de l'ensemble des caractéristiques essentielles constituant le véhicule, et à moduler, paramétrer, modifier en combinaison ces caractéristiques.

## Revendications

1. Procédé d'optimisation de la performance acoustique et vibratoire à l'intérieur d'un habitacle mobile consistant à :
- établir la liste des indicateurs de confort que sont les critères définissant la qualité de la performance acoustique et vibratoire et fournir des valeurs cibles de ces indicateurs,
- établir la liste des contraintes concernant tout ou partie de l'ensemble de l'habitacle et liées à plusieurs équipementiers, les contraintes étant des informations relatives à toutes les exigences autres que celles concernant le confort acoustique ou vibratoire,
- définir des données d'entrée influençant la génération, la propagation et la transmission des champs vibratoires et acoustiques à l'intérieur de l'habitacle, les données d'entrée étant liées à plusieurs équipementiers et certaines données d'entrée étant limitées par des contraintes,
- estimer les valeurs des indicateurs de confort de l'habitacle en fonction des données d'entrée,
- comparer les valeurs estimées aux valeurs cibles,
- lorsque les valeurs estimées ne correspondent pas aux valeurs cibles, agir isolément ou en combinaison sur tout ou partie des données d'entrée,
- répéter de manière itérative les étapes d'estimation des valeurs des indicateurs de confort du véhicule, de leur comparaison avec les valeurs cibles, et d'action sur les données d'entrée, de manière à assurer la convergence des valeurs des indicateurs de confort vers les valeurs cibles.

2. Procédé selon la revendication 1, **caractérisé en ce que** les critères définissant la qualité de performance acoustique et vibratoire consistent en des indicateurs physiques mesurables se rapportant à l'habitacle mobile dans son ensemble ou à une pièce ou à un équipement de l'habitacle.

3. Procédé selon la revendication 2, **caractérisé en ce que** les indicateurs physiques comportent notamment le niveau de la pression acoustique en certains points de l'habitacle, le niveau du déplacement, de la vitesse ou de l'accélération vibratoire en certains points de l'habitacle, l'indicateur psycho-acoustique ou d'intelligibilité en certains points de l'habitacle, le niveau de puissance acoustique rayonnée par une pièce ou un équipement, le niveau d'effort injecté par une pièce ou un équipement, le coefficient d'absorption acoustique de certaines pièces ou équipements, l'isolement acoustique de certaines pièces ou équipements, le coefficient d'amortissement vibratoire apporté par certaines pièces ou équipements, l'atténuation vibratoire apportée par un système de fixation entre deux pièces ou équipements.

4. Procédé selon l'une des revendications 1 à 3, **caractérisé en ce qu'**on établit la liste des contraintes absolues qui doivent nécessairement être satisfaites pour garantir certaines fonctions jugées essentielles, et sur lesquelles il est impératif de ne pas agir, et la liste des contraintes indéfinies associées à leur plage d'évolution, c'est-à-dire les caractéristiques dont les valeurs peuvent évoluer sans préjudice sur la qualité globale du véhicule en définissant les proportions ou plages pour lesquelles on peut faire varier ces valeurs.

5. Procédé selon l'une quelconque des revendications précédentes, **caractérisé en ce que** les données d'entrée comportent la géométrie et/ou les dimensions du véhicule et d'éléments constitutifs du véhicule, les valeurs de propriétés physiques des matériaux et des états comportementaux des éléments constitutifs du véhicule vis-à-vis des excitations acoustiques et vibratoires sous forme de valeurs, de bases modales, de fonctions de transfert, de spectres ou interspectres.

6. Procédé selon l'une quelconque des revendications précédentes, **caractérisé en ce qu'**on utilise des moyens de conception pour estimer des grandeurs destinées à être corrélées aux valeurs cibles des critères définissant la qualité de la performance acoustique et vibratoire, et pour comparer ces grandeurs aux valeurs cibles.

7. Procédé selon la revendication 6, **caractérisé en ce qu'**on définit lesdits moyens de conception avant toute étape d'estimation des valeurs de confort.

8. Procédé selon la revendication 6 ou 7, **caractérisé en ce que** les moyens de conception sont basés sur des approches expérimentales et/ou prédictives totalement numériques.

9. Procédé selon l'une quelconque des revendications précédentes, **caractérisé en ce que** les données d'entrée sont modifiées en gardant telles quelles les données d'entrées figées par une contrainte absolue, ou en modifiant les données d'entrée relatives à des contraintes indéfinies, à l'intérieur du cadre qui leur a été fixé, ou en modifiant librement les données d'entrée qui sont indépendantes d'une quelconque contrainte.

10. Procédé selon l'une quelconque des revendications précédentes, **caractérisé en ce que** lorsque après un nombre d'itérations jugé suffisant selon la complexité du problème posé, aucun jeu de données d'entrée n'a permis d'atteindre les objectifs, ces derniers sont redéfinis en redéfinissant notamment les données d'entrée et éventuellement les contraintes.

11. Procédé selon l'une quelconque des revendications précédentes, **caractérisé en ce que** lorsque le procédé d'optimisation est terminé, on établit un bilan des données d'entrée ayant permis de les atteindre.

12. Procédé selon l'une quelconque des revendications précédentes, **caractérisé en ce qu'**on modifie de manière spatiale la forme d'un mode de rayonnement du vitrage lorsque ledit vitrage est excité par un champ acoustique ou vibratoire.

13. Procédé selon la revendication 12, **caractérisé en ce qu'**on supprime pour le vitrage au moins le ou les modes de rayonnement qui sont couplés avec un ou plusieurs modes de cavité de l'habitacle.

14. Procédé selon l'une quelconque des revendications 1 à 11, **caractérisé en ce qu'**on décale de manière fréquentielle un mode de rayonnement du vitrage par rapport à un mode de cavité de l'habitacle.

15. Procédé selon l'une des revendications 1 à 11, **caractérisé en ce qu'**on génère des phénomènes acoustiques en opposition de phase par rapport aux rayonnements dans l'habitacle.

16. Procédé selon l'une des revendications 1 à 11, **caractérisé en ce qu'**on agit sur la nature du matériau du joint périphérique associé entre le vitrage et l'habitacle.

17. Procédé selon l'une des revendications 1 à 11, **caractérisé en ce qu'**on modifie le couplage mécanique entre le vitrage et l'habitacle.

18. Procédé selon l'une quelconque des revendications précédentes, **caractérisé en ce qu'**il est mis en oeuvre par l'ensemblier destiné à assurer la conception globale de l'habitacle et/ou par au moins un équipementier destiné à assurer la conception d'une partie de l'habitacle.

19. Procédé selon l'une quelconque des revendications précédentes, **caractérisé en ce qu'**il est appliqué à un habitacle pour véhicule, notamment véhicule automobile, camion, car, engin agricole, train.

20. Procédé selon l'une quelconque des revendications 1 à 19, **caractérisé en ce qu'**il est appliqué à un habitacle pour avion, bateau, sous-marin.

## Patentansprüche

1. Verfahren zur Optimierung der Schall- und Schwingungsleistung innerhalb eines beweglichen Fahrgastraums, welches darin besteht:
- die Liste der Komfortindikatoren zu erstellen, welches die Kriterien sind, die die Qualität der Schall- und Schwingungsleistung definieren, und Zielwerte dieser Indikatoren bereitzustellen,
- die Liste der Auflagen zu erstellen, die den gesamten Fahrgastraum oder einen Teils dessen betreffen und die an mehrere Ausrüster gebunden sind, wobei die Auflagen Informationen bezüglich aller anderen Anforderungen als denjenigen, die den Schall- oder Schwingungskomfort betreffen, sind,
- Eingabedaten zu definieren, die die Erzeugung, die Ausbreitung und die Übertragung der Schwingungs- und Schallfelder innerhalb des Fahrgastraums beeinflussen, wobei die Eingabedaten an mehrere Ausrüster gebunden sind und einige Eingabedaten durch Auflagen eingeschränkt sind,
- die Werte der Komfortindikatoren des Fahrgastraums in Abhängigkeit von den Eingabedaten zu schätzen,
- die Schätzwerte mit den Zielwerten zu vergleichen,
- wenn die Schätzwerte nicht den Zielwerten entsprechen, alle Eingabedaten oder einen Teil derer einzeln oder in Kombination zu beeinflussen,
- die Schritte des Schätzens der Werte der Komfortindikatoren des Fahrzeugs, ihres Vergleichens mit den Zielwerten und des Beeinflussens der Eingabedaten iterativ zu wiederholen, um das Konvergieren der Werte der Komfortindikatoren in Richtung der Zielwerte sicherzustellen.

2. Verfahren nach Anspruch 1, **dadurch gekennzeichnet, dass** die Kriterien, welche die Qualität von Schall- und Schwingungsleistung definieren, aus messbaren physikalischen Indikatoren bestehen, die sich auf den beweglichen Fahrgastraum in seiner Gesamtheit oder auf einen Teil oder eine Ausstattung des Fahrgastraums beziehen.

3. Verfahren nach Anspruch 2, **dadurch gekennzeichnet, dass** die physikalischen Indikatoren insbesondere den Pegel des Schalldrucks an einigen Stellen des Fahrgastraums, den Grad der Bewegung, der Geschwindigkeit oder der Schwingungsbeschleunigung an einigen Stellen des Fahrgastraums, den psychoakustischen oder Verständlichkeitsindikator an einigen Stellen des Fahrgastraums, den Pegel der durch ein Teil oder eine Ausstattung abgestrahlten Schallleistung, den Grad der durch ein Teil oder eine Ausstattung eingeleiteten Kraft, den Schallabsorptionskoeffizienten von einigen Teilen oder Ausstattungen, die Schalldämmung von einigen Teilen oder Ausstattungen, den durch einige Teile oder Ausstattungen erbrachten Schwingungsdämpfungskoeffizienten, die durch ein System zur Befestigung zwischen zwei Teilen oder Ausstattungen erbrachte Schwingungsdämpfung umfassen.

4. Verfahren nach einem der Ansprüche 1 bis 3, **dadurch gekennzeichnet, dass** die Liste der absoluten Auflagen, die unbedingt erfüllt werden müssen, um einige als wesentlich erachtete Funktionen sicherzustellen, und die keinesfalls beeinflusst werden dürfen, sowie die Liste der undefinierten, ihrem Entwicklungsbereich zugeordneten Auflagen erstellt wird, das heißt die Merkmale, deren Werte sich durch Definieren der Anteile oder Bereiche, bei denen diese Werte variiert werden können, ohne Nachteil für die Gesamtqualität des Fahrzeugs entwickeln können.

5. Verfahren nach einem der vorhergehenden Ansprüche, **dadurch gekennzeichnet, dass** die Eingabedaten die Geometrie und/oder die Abmessungen des Fahrzeugs und von Bestandteilen des Fahrzeugs, die Werte von physikalischen Eigenschaften der Materialien und der Verhaltenszustände der Bestandteile des Fahrzeugs gegenüber Schall- und Schwingungserregungen in Form von Werten, von modalen Basen, von Übertragungsfunktionen, von Spektren oder Zwischenspektren umfassen.

6. Verfahren nach einem der vorhergehenden Ansprüche, **dadurch gekennzeichnet, dass** Konzeptionsmittel verwendet werden, um Größen zu schätzen, die dazu bestimmt sind, zu den Zielwerten der Kriterien, welche die Qualität der Schall- und Schwingungsleistung definieren, in Korrelation gesetzt zu werden, und um diese Größen mit den Zielwerten zu vergleichen.

7. Verfahren nach Anspruch 6, **dadurch gekennzeichnet, dass** die Konzeptionsmittel vor jedem Schritt zum Schätzen der Komfortwerte definiert werden.

8. Verfahren nach Anspruch 6 oder 7, **dadurch gekennzeichnet, dass** die Konzeptionsmittel auf erfahrungsgemäßen und/oder vollkommen digitalen Vorhersage-Ansätzen gründen.

9. Verfahren nach einem der vorhergehenden Ansprüche, **dadurch gekennzeichnet, dass** die Eingabedaten dadurch modifiziert werden, dass die durch eine absolute Auflage festgelegten Eingabedaten so wie sie sind beibehalten werden oder dass die Eingabedaten bezüglich undefinierter Auflagen innerhalb des Rahmens, der für sie festgelegt wurde, verändert werden oder dass die Eingabedaten, die nicht von irgendeiner Auflage abhängig sind, frei verändert werden.

10. Verfahren nach einem der vorhergehenden Ansprüche, **dadurch gekennzeichnet, dass** wenn nach einer Anzahl von Wiederholungen, die entsprechend der Komplexität der gestellten Aufgabe als ausreichend erachtet wird, keinerlei Satz von Eingabedaten ermöglicht hat, die Ziele zu erreichen, letztere dadurch neu definiert werden, dass insbesondere die Eingabedaten und eventuell die Auflagen neu definiert werden.

11. Verfahren nach einem der vorhergehenden Ansprüche, **dadurch gekennzeichnet, dass** wenn das Optimierungsverfahren beendet ist, eine Bilanz der Eingabedaten erstellt wird, die ermöglicht haben, sie zu erreichen.

12. Verfahren nach einem der vorhergehenden Ansprüche, **dadurch gekennzeichnet, dass** die Form einer Strahlungsmode der Verglasung räumlich verändert wird, wenn die Verglasung durch ein Schall- oder Schwingungsfeld erregt wird.

13. Verfahren nach Anspruch 12, **dadurch gekennzeichnet, dass** bei der Verglasung wenigstens die Strahlungsmode oder -moden unterdrückt wird/werden, die mit einer oder mehreren Resonanz-Moden des Fahrgastraums gekoppelt sind.

14. Verfahren nach einem der Ansprüche 1 bis 11, **dadurch gekennzeichnet, dass** eine Strahlungsmode der Verglasung gegenüber einer Resonanz-Mode des Fahrgastraums frequenzmäßig versetzt wird.

15. Verfahren nach einem der Ansprüche 1 bis 11, **dadurch gekennzeichnet, dass** Schallphänomene in Gegenphase zu den Strahlungen in dem Fahrgastraum erzeugt werden.

16. Verfahren nach einem der Ansprüche 1 bis 11, **dadurch gekennzeichnet, dass** die Art des Materials der zugeordneten Umfangsdichtung zwischen der Verglasung und dem Fahrgastraum beeinflusst wird.

17. Verfahren nach einem der Ansprüche 1 bis 11, **dadurch gekennzeichnet, dass** die mechanische Kopplung zwischen der Verglasung und dem Fahrgastraum veränder wird.

18. Verfahren nach einem der vorhergehenden Ansprüche, **dadurch gekennzeichnet, dass** es durch den Gestalter, der dazu bestimmt ist, die Gesamtkonzeption des Fahrgastraums sicherzustellen, und/oder durch wenigstens einen Ausrüster, der dazu bestimmt ist, die Konzeption eines Teils des Fahrgastraums sicherzustellen, durchgeführt wird.

19. Verfahren nach einem der vorhergehenden Ansprüche, **dadurch gekennzeichnet, dass** es auf einen Fahrgastraum für ein Fahrzeug, insbesondere Kraftfahrzeug, einen Lkw, Reisebus, eine Landwirtschaftsmaschine, einen Zug angewandt wird.

20. Verfahren nach einem der Ansprüche 1 bis 19, **dadurch gekennzeichnet, dass** es auf einen Fahrgastraum für ein Flugzeug, Schiff, U-Boot angewandt wird.

## Claims

1. A method for optimizing the sound and vibration performance inside a mobile passenger compartment consisting in:
- establishing the list of comfort indices that are the criteria defining the quality of the sound and vibration performance and providing target values of these indices,
- establishing the list of requirements concerning some or all of the whole passenger compartment and relating to several equipment suppliers, the requirements being information relating to all the exigencies other than those concerning sound or vibration comfort,
- defining input data influencing the generation, propagation and transmission of the vibration and sound fields inside the passenger compartment, the input data being associated with several equipment suppliers and certain input data being limited by requirements,
- estimating the values of the passenger compartment comfort indices according to the input data,
- comparing the estimated values with the target values,
- when the estimated values do not match the target values, acting individually or in combination on some or all of the input data,
- repeating in an iterative manner the steps for estimating the vehicle comfort index values, for comparing them with the target values, and for acting on the input data, so as to ensure the convergence of the values of the comfort indices with the target values.

2. The method as claimed in claim 1, **characterized in that** the criteria defining the quality of the sound and vibration performance consist in measurable physical indices relating to the mobile passenger compartment in its entirety or to a part or an item of equipment of the passenger compartment.

3. The method as claimed in claim 2, **characterized in that** the physical indices include in particular the level of sound pressure at certain points of the passenger compartment, the level of vibration movement, speed or acceleration at certain points of the passenger compartment, the psychoacoustic or intelligibility index at certain points of the passenger compartment, the level of sound power radiated by a part or an item of equipment, the level of force injected by a part or an item of equipment, the coefficient of sound absorption of certain parts or items of equipment, the sound insulation of certain parts or items of equipment, the coefficient of vibration damping provided by certain parts or items of equipment, the vibration attenuation provided by a fastening system between two parts or items of equipment.

4. The method as claimed in one of claims 1 to 3, **characterized in that** the user establishes the list of absolute requirements that must necessarily be satisfied to ensure certain functions that are considered essential and upon which it is imperative not to act, and the list of undefined requirements associated with their range of evolution, that is to say the characteristics whose values may change without prejudice to the overall quality of the vehicle by defining the proportions or ranges for which these values can be varied.

5. The method as claimed in any one of the preceding claims, **characterized in that** the input data comprise the geometry and/or the dimensions of the vehicle and constituent elements of the vehicle, the physical property values of the materials and the behavioral states of the constituent elements of the vehicle with respect to the sound and vibration excitations in the form of values, modal bases, transfer functions, spectra or interspectra.

6. The method as claimed in any one of the preceding claims, **characterized in that** design means are used to estimate magnitudes designed to be correlated with the target values of the criteria defining the quality of the sound and vibration performance, and to compare these magnitudes with the target values.

7. The method as claimed in claim 6, **characterized in that** said design means are defined before any step for estimating the comfort values.

8. The method as claimed in claim 6 or 7, **characterized in that** the design means are based on experimental and/or totally numerical predictive approaches.

9. The method as claimed in any one of the preceding claims, **characterized in that** the input data are modified while keeping unchanged the input data that are frozen by an absolute requirement, or by modifying the input data relating to undefined requirements, within the framework set for them, or by freely modifying the input data that are independent of any requirement.

10. The method as claimed in any one of the preceding claims, **characterized in that**, when, after a number of iterations judged sufficient depending on the complexity of the problem posed, no input data set has made it possible to achieve the objectives, the latter are redefined by redefining in particular the input data and where necessary the requirements.

11. The method as claimed in any one of the preceding claims, **characterized in that**, when the optimization method is finished, a list of input data having made it possible to achieve them is established.

12. The method as claimed in any one of the preceding claims, **characterized in that** the shape of a radiation mode of the glazing unit, when said glazing unit is excited by a sound or vibration field, is modified in a spatial manner.

13. The method as claimed in claim 12, **characterized in that** at least the radiation mode or modes that are coupled with one or more cavity modes of the passenger compartment are removed for the glazing unit.

14. The method as claimed in any one of claims 1 to 11, **characterized in that** a radiation mode of the glazing unit is offset frequentially relative to a cavity mode of the passenger compartment.

15. The method as claimed in one of claims 1 to 11, **characterized in that** sound phenomena are generated in phase opposition relative to the radiations in the passenger compartment.

16. The method as claimed in one of claims 1 to 11, **characterized in that** action is taken on the nature of the material of the associated peripheral seal between the glazing unit and the passenger compartment.

17. The method as claimed in one of claims 1 to 11, **characterized in that** the mechanical coupling between the glazing unit and the passenger compartment is modified.

18. The method as claimed in any one of the preceding claims, **characterized in that** it is applied by the assembler intended to carry out the overall design of the passenger compartment and/or by at least one equipment supplier intended to carry out the design of a portion of the passenger compartment.

19. The method as claimed in any one of the preceding claims, **characterized in that** it is applied to a passenger compartment for a vehicle, particularly a motor vehicle, truck, coach, agricultural machine or train.

20. The method as claimed in any one of claims 1 to 19, **characterized in that** it is applied to a passenger compartment for an aircraft, boat or submarine.
